# EUROPEAN PATENT APPLICATION

(11) **EP 2 535 807 A1**
(43) Date of publication of application: **19.12.2012**
(21) Application number: 12172109.6
(22) Date of filing: 15.06.2012
(51) Int. Cl.: G06F 9/44

(54) **Computer system**

(30) Priority: 15.06.2011 GB 201110072; 04.11.2011 GB 201119025
(71) Applicant: Chipperfield, John Stuart, Hampshire SO16 7HH (GB); Melas, Panagiotis, 83200 Karlovassi, Samos (GR); Chipperfield, Richard Thomas Seaton, Hampshire SO16 7HH (GB); Zitawi, Hisham Akram, London W2 2EA (GB); Venables, David John, Panama City (PA)
(72) Inventor: Chipperfield, John Stuart, Southampton, Hampshire SO16 7HH (GB)
(74) Representative: Robinson, Simon John

(57) **Abstract**

A graphic user interface, GUI, (1) comprising two display regions to display representations of digital objects, the GUI capable of displaying the display regions simultaneously, the display regions comprising a resource display region (10), and
a selection display region (20),
the GUI arranged to enable a user to select object representations (10a) displayed in the resource display region to be displayed in the selection display region, and wherein, multiple object representations (10a') can be displayed in the selection display region.

## Description

### Technical Field

The present invention relates generally to computer systems.

### Background

When viewing digital objects, such as images, for example, it can often be useful to display multiple images, side-by-side, at the same time. One way to achieve this is to open a separate window/pane for each object to be displayed. The user is then required to resize and reposition the different windows/panes so that the images are of sufficient size and do not overlap. However, this is a time-consuming and awkward procedure for the user in manipulating the digital objects.

We have realised that it would be beneficial to provide a graphic user interface which allows a user to display and review multiple digital objects simultaneously, and so facilitate manipulation of digital objects.

### Summary

According to a first aspect of the invention there is provided a graphic user interface, GUI, comprising two display regions to display representations of digital objects, the GUI capable of displaying the display regions simultaneously, the display regions comprising
a resource display region, and
a selection display region,
the GUI arranged to enable a user to select object representations displayed in the resource display region to be displayed in the selection display region, and wherein, multiple object representations can be displayed in the selection display region.

Preferably the representations in the resource display region and the selection display region are based on copies of an originating object.

Preferably, in the case of digi images and video files, the object representations in the selection display region are geometrically larger than the representation of the object in the resource display region. In the case of audio files, these will be displayed with a larger icon which will include a display of properties of the respective file.

Preferably, the object representation in the selection display region comprises an image of the object.

The object representations in the resource region preferably comprise at least one of text associated with the object and/or an image of the object.

On a user selecting an object representation in the resource display region, a reference is made to the associated digital object and the object is appropriately sized to generate the object representation in the selection display region.

The GUI is preferably arranged such that a user can select an object representation in the selection display region such that an enlarged representation of the object is displayed.

The GUI is preferably arranged such that the user can reposition the object representations within the selection display region. The GUI is such that the user is able to reposition the representations relative to each other in the selection display region.

The object representations in resource display region preferably reference a respective storage location/address.

The object representations shown in the resource display region are preferably of a smaller data size than the digital objects that they represent.

The object representations in the resource display region are generated from the respective digital objects.

The GUI may be such that digital objects included in the selection display region are maintained in said region when the user selects different objects to be displayed in the resource display region.

The graphic user interface is preferably suitable for use with a computer.

By computer or computer system we include any apparatus or device which includes a data processor and a memory, such as a personal computer (PC); a portable computer or a smartphone or similar.

According to a second aspect of the invention there are provided machine readable instructions, which, when run by a data processor implement the GUI of the first aspect of the invention. The instructions may be stored on any suitable form of data carrier, and are preferably embodied as a software product.

The GUI may include one or more features described in the detailed description and/or shown in the drawings.

### Brief description of the drawings

Various embodiments of the invention will now be described, by way of example only, with reference to the accompanying drawings in which:
**Figure 1** is a schematic representation of a graphic user interface, and
**Figure 2** is a block diagram of a computer system.

### Detailed Description

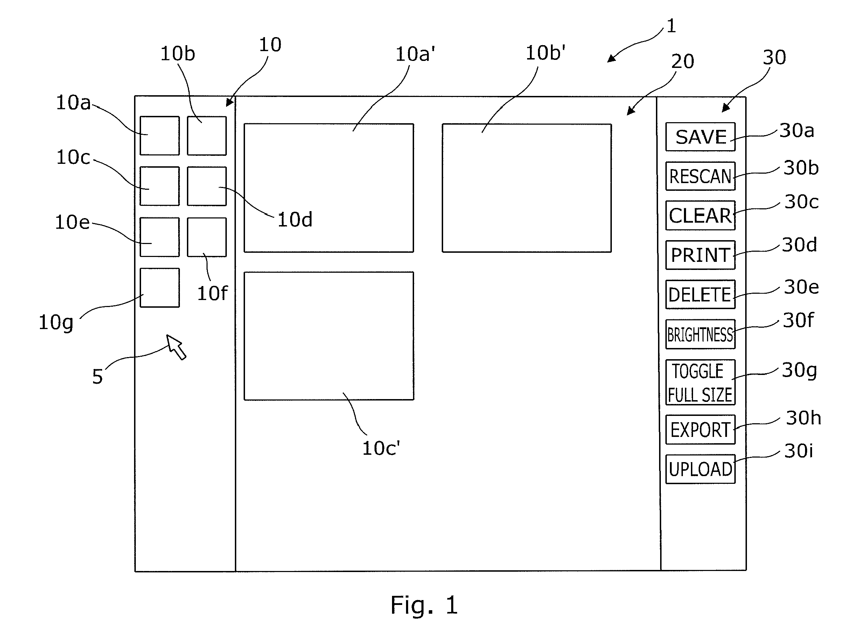

Reference is made initially to Figure 1 which shows a graphic user interface (GUI) 1. The GUI 1 comprises three regions, namely a resource display region or pane 10, a selection display region or pane 20 and a control region or pane 30. As will be described in more detail below, the GUI 1 advantageously allows users to select multiple digital objects, or rather representations/icons thereof, and view the representations of the objects simultaneously. Although particular reference will be made to digital objects in the form of images (such as digital photographs), it will be appreciated that the GUI 1 is suitable for use with many types of digital object, such as (text) documents, database resources, video files and audio files. Further advantageously the representations in the resource display region and in the selection display region are copies of an associated originating object stored in memory ensuring that the stored originating object is safeguarded in particular should any changes be made (to copies) by a user.

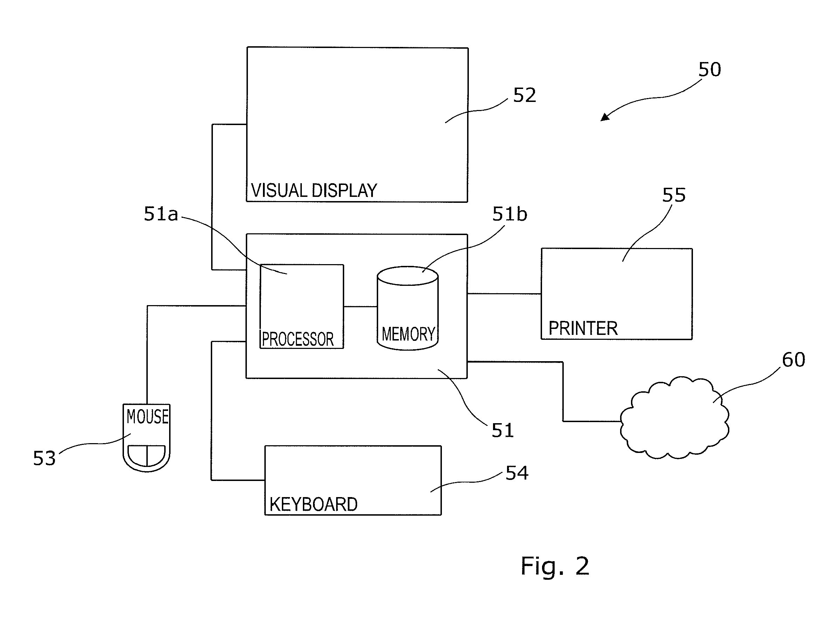

Reference is now made to Figure 2 which shows (a simplified representation of) a computer system 50. The computer system 50 comprises a computer unit 51, the unit comprising a data processor 51a and a memory 51b. The memory 51b stores machine-executable instructions which, when run by the processor 51a, generate the GUI 1 on the visual display unit 52. The computer unit 51 is further connected to a mouse 53, a keyboard 54 and a printer 55.

Referring to Figure 1, the resource display region 10 comprises multiple representations 10a, 10b, 10c, 10d, 10e, 10f and 10g. Each representation comprises a so-called thumbnail image of a respective digital object. The thumbnail image is of reduced data size as compared to the data size of the respective digital object. Each of the representations in the resource display region has associated with it a reference to the digital object (which is stored in the memory 51b).

On initiation of the GUI 1, the user is required to direct the GUI to a particular memory location/address, or look for digital objects of a certain type, for example image files. The resource region 10 can be populated in accordance with the instructions of the user. For example, the user can use the keyboard 54 and/or the mouse 53, to provide an input so that a particular memory location, such as a directory, a folder, a file or other resources such as networks or capturing devices (for example phones, cameras), is identified and to populate the resource region 10 with copies of the digital objects stored at that memory location. The processor 51a then scans the memory 51b for digital objects stored in the memory which are within the search criteria. Once located, the processor 51a then populates the resource display region with the thumbnail copy representations of the objects.

Using the mouse 53 to control a cursor 5, the user can position the cursor 5 over a representation of interest in the resource display region 10. The user can then control the cursor 5 to drag the selected representation into the adjacent selection display region 20. On determining that the user has performed such an action, the processor 51a generates a resized version of the digital object which is of larger geometrical size as compared to the geometrical size of the associated (thumbnail) representation in the resource display region. The processor 51a generates the representation for the selection display region by resizing the digital object to a size which is such that multiple such representations can be contained within the selection display region. Each of the representations for the selection display region is such that the data size of the representation is smaller, in most cases, than the data size of the originating digital object. However, it will be appreciated that when the representations for the selection display region are generated, the digital object may be expanded or compressed, as appropriate.

As shown in Figure 1, a user has selected the representations 10a, 10b, 10c in the region 10 for display in the selection display region 20 as shown at 10a', 10b' and 10c', respectively.

Once within the selection region 20, the user can use the mouse 53 to move the representations around the region 20 to different relative positions, as desired. This functionality is of particular assistance in determining how different images appear in different relative positions in the selection region 20, so enabling the user to easily compare and contrast the various representations. The group/subset of representations in the selection display region 20 can be saved as a so-called 'playlist' by selecting the SAVE button 30a in the control region 30. This operation effectively involves saving the selected objects as data, or as a copy of what is shown on the screen of the visual display unit 52. A copy of what is shown on the screen could be saved to a portable memory device such as a memory stick. Alternatively, or in addition, the user can print all of the images shown in the region 20 by selecting the PRINT button 30d. Selecting the PRINT button causes a window to appear offering a choice of the number of images desired to be printed on each A4 or equivalent page size (such as so-called A4 letter size). Also, a choice of DPI settings is offered. By selecting the OK button on the window, the desired number of images to be printed on each A4 button on the window, the desired number of images to be printed on each A4 or equivalent default size page and then printed by the printer 55 on as many A4 or equivalent default size pages as is necessary for the number of images in the selection display region 20. In so doing the GUI automatically resizes the images to fill the printed page (whether there is just one image or several) by the printer 55.

Turning to further aspects of the functionality of the GUI 1, the button 30b, named RESCAN, rescans a particular memory location/search criteria, used to populate the resource selection region 10. This feature advantageously allows for the resource display region to be updated to take account of any changes which have occurred, for example originating digital objects having been added or removed from the memory 51b since the resource selection region was last populated.

The button 30c designated CLEAR, clears the current selection from the selection display region 20.

The button 30e, designated DELETE, allows the user to remove any particular representations from the selection display region 20.

It will be appreciated that although the GUI 1 shows both the resource display region 10 and the selection display region 20 simultaneously, the user may be provided with the option of viewing the selection display region 20 and the control region 30 only ie excluding the resource display region 10. This would allow maximisation of the screen space for viewing the representations in the selection display region once the user had selected the required digital objects from the resource display region 20. However, despite that option, the GUI 1 would during some stage of use of the GUI, be capable of displaying all three regions simultaneously, and in particular at least the resource display region 10 and a selection display region 20.

Conveniently, any of the representations in the selection display region 20 can be enlarged. This is achieved by the user positioning the cursor 5 over one of the representations 10a', 10b' or 10c', and using the mouse 53 to select that representation and then by use of the "TOGGLE FULL SIZE" button 30g, the processor 51a then generates an enlarged displayed version of the digital object which fills substantially the entire selection display region. The enlarged representation can then be either printed or saved, at the choice of the user. In the case where the object is an audio or video file, by selecting the representation in this way, the file is caused to play, with any associated graphic display being enlarged.

It will be appreciated that the GUI 1 could be used to simultaneously display different types of digital objects, for example both image files and video files.

It will further be appreciated that although the digital objects are located in the memory 51b of the host computer, the digital objects may be located remotely of the computer at a server, database, network resource or web address, shown generally at 60.

The functionality of the GUI 1 includes allowing a user to alter the appearance of any of the objects in the selection display region by selecting the object and then the "BRIGHTNESS" button 30f to increase or reduce the brightness of the selected object. Once such changes have been made (to the copy) these can either be uploaded (using button 30i), exported (using button 30h), printed or simply saved with altered characteristics but does not alter the original. Any such alterations are saved as a separate entity (i.e. as a copy), without altering the original digital object. This is preferably achieved by the data processor 51a generating a copy of the original digital object being used for the selection display area. In this way the original digital object is safeguarded.

The GUI advantageously allows enhanced manipulation of digital objects, including the functionality of allowing multiple objects, selected by the user, to be viewed together easily. The GUI 1 finds application in many different fields. For example, the GUI 1 could be used by clinicians to view medical imaging, such as X-rays. The GUI 1 could also be used by photographers to view and compare photos. The GUI 1 finds yet further application in the field of on-line purchasing of goods services, wherein customers could conveniently view and compare different goods/services in order to enable them to make the appropriate purchasing decision.

It will be appreciated that if the user has caused one or more objects to be displayed in the display region 10, the user is able to select alternative objects in the resource selection region without altering the objects displayed in the display region. For example, the user may cause a different folder of objects to be included in the selection region. However, by doing so the objects which are shown in the display region continue to be shown there (despite the user having selected different objects in the resource selection region). This allows the user to combine objects from different resource locations (e.g. different folders) into the display region simultaneously.

## Claims

1. A graphic user interface, GUI, comprising two display regions to display representations of digital objects, the GUI capable of displaying the display regions simultaneously, the display regions comprising a resource display region, and
a selection display region,
the GUI arranged to enable a user to select object representations displayed in the resource display region to be displayed in the selection display region, and wherein, multiple object representations can be displayed in the selection display region.

2. A graphic user interface as claimed in claim 1 in which, in the case of digi images and video files, the object representations in the selection display region are geometrically larger than the representation of the object in the resource display region.

3. The graphic user interface as claimed in claim 1 or claim 2 in which, the object representation in the selection display region comprises an image of the object.

4. A graphic user interface as claimed in any preceding claim in which, the object representations in the resource region comprise at least one of text associated with the object and/or an image of the object.

5. A graphic user interface as claimed in any preceding claim in which, on a user selecting an object representation in the resource display region, a reference is made to the associated digital object and the object is appropriately sized to generate the object representation in the selection display region.

6. A graphic user interface as claimed in any preceding claim in which, the GUI is arranged such that a user can select an object representation in the selection display region such that an enlarged representation of the object is displayed.

7. A graphic user interface as claimed in any preceding claim in which, is arranged such that the user can reposition the object representations within the selection display region.

8. A graphic user interface as clamed in any preceding claims in which, the object representations in resource display region preferably reference a respective storage location/address.

9. A graphic user interface as claimed in any preceding claim in which the object representations shown in the resource display region are of a smaller data size than the digital objects that they represent.

10. A graphic user interface is claimed in any preceding claim in which, The object representations in the resource display region are generated from the respective originating digital objects.

11. A graphic user interface as claimed in any preceding claim arranged to allow a user to alter one or more characteristics of an object displayed in the display region, and wherein such alterations are stored as a copy of an originating version of the object.

12. A graphic user interface s claimed in any preceding claim which is such that digital objects included in the selection display region are maintained in said region when the user selects different objects to be displayed in the resource display region.

13. A graphic user interface as claimed in any preceding claim arranged to generate a copy of an originating digital object when a user causes an object in the resource display region to be displayed on the selection display region.

14. A graphic user interface as claimed in any preceding claim which is such that when a user causes an object to be displayed in the selection display region a copy of the object is generated, and said copy is used to generate the display of the object on the selection display region.

15. Machine readable instructions, which, when run by a data processor implement the GUI of any of the claims 1 to 14.
